# EUROPÄISCHE PATENTSCHRIFT

(11) **EP 3 655 413 B1**
(45) Veröffentlichungstag und Bekanntmachung des Hinweises auf die Patenterteilung: **11.08.2021**
(21) Anmeldenummer: 18730818.4
(22) Anmeldetag: 20.06.2018
(51) Int. Cl.: C07F 9/32, C07F 9/30

(54) **HERSTELLUNG VON GLUFOSINAT DURCH UMSETZUNG VON 3-[N-BUTOXY(METHYL)PHOSPHORYL]-1-CYANOPROPYLACETAT ZU EINER MISCHUNG AUS N-BUTYL(3-AMINO-3-CYANOPROPYL)-METHYLPHOSPHINAT UND (3-AMINO-3-CYANOPROPYL)-METHYLPHOSPHINSÄURE AMMONIUMSALZ**
PREPARATION OF GLUFOSINATE BY CONVERTING 3-[N-BUTOXY(METHYL)PHOSPHORYL]-1-CYANOPROPYLACETATE TO A MIXTURE OF N-BUTYL(3-AMINO-3-CYANOPROPYL)-METHYLPHOSPHINATE AND (3-AMINO-3-CYANOPROPYL)-METHYLPHOSPHINIC ACID AMMONIUM SALT
FABRICATION DE GLUFOSINATE PAR CONVERSION DE 3-[N-BUTOXY(MÉTHYL)PHOSPHORYL]-1-CYANOPROPYLACÉTATE EN UNE MÉLANGE DE N-BUTYL(3-AMINO-3-CYANOPROPYL)-MÉTHYLPHOSPHINATE ET LA SEL D'AMMONIUM D'ACID PHOSPHINIQUE (3-AMINO-3-CYANOPROPYL)-MÉTHYL

(30) Priorität: 21.07.2017 EP 17182645
(43) Veröffentlichungstag der Anmeldung: 27.05.2020
(73) Patentinhaber: BASF SE, 67056 Ludwigshafen (DE)
(72) Erfinder: KARIG, Gunter, 65926 Frankfurt am Main (DE); MEMMEL, Frank, 51368 Leverkusen (DE); FORD, Mark, James, 51368 Leverkusen (DE)
(74) Vertreter: BASF IP Association
(86) Internationale Anmeldenummer: PCT/EP2018/066402
(87) Internationale Veröffentlichungsnummer: WO 2019/015909

(56) Entgegenhaltungen:
- WO-A1-2017/037034
- CN-A- 102 399 240
- CN-A- 103 483 379
- CN-A- 105 481 894

## Beschreibung

Die vorliegende Erfindung betrifft primär Verfahren zur Herstellung bestimmter phosphorhaltiger α-Aminonitrile der nachfolgend definierten Formeln (Ia) und (Ib) aus entsprechenden phosphorhaltigen Cyanhydrinestern und deren Verwendung zur Herstellung von Glufosinat bzw. von Glufosinat-Salzen. Ferner betrifft die vorliegende Erfindung ein Verfahren zur Herstellung von Glufosinat bzw. von Glufosinat-Salzen.

Phosphorhaltige Cyanhydrinester sind wertvolle Zwischenprodukte auf verschiedenen technischen Gebieten, insbesondere zur Herstellung biologisch aktiver Substanzen, die im pharmazeutischen bzw. agrochemischen Bereich eingesetzt werden können.

US 4,168,963 beschreibt die Herstellung diverser phosphorhaltiger und herbizid wirksamer Verbindungen, von denen insbesondere Phosphinothricin (2-Amino-4-[hydroxy(methyl)phosphinoyl]-butansäure; Kurzbezeichnung ("common name"): Glufosinate, nachfolgend Glufosinat) bzw. dessen Salze kommerzielle Bedeutung im Bereich der Agrochemie (Agrarchemie) erlangt haben.

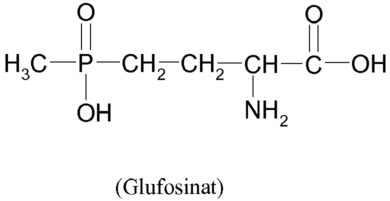

Methoden zur Herstellung von Zwischenprodukten zur Synthese solcher phosphorhaltiger und herbizid wirksamer Verbindungen, insbesondere von Glufosinat, sind beispielsweise in US 4,521,348, US 4,599,207 und US 6,359,162B1 beschrieben. Die Veröffentlichungen WO 2015/173146, WO 2017/037033, WO 2017/037034, WO 2017/037009 und WO 2017/037012 beschreiben weiter verbesserte Verfahrensvarianten zur Herstellung von phosphorhaltigen Cyanhydrinen bzw. Cyanhydrinestern.

CA1231103 (entsprechend EP 0 121 226) beschreibt ein Verfahren zur Herstellung von Phosphinothricin durch Behandlung von 4-(Hydroxymethyl-phosphinyl)-2-oxobuttersäure in Gegenwart eines Hydrierungskatalysators in einer Wasserstoffatmosphäre mit Ammoniak oder primären Aminen.

US 4,521,348 (entsprechend EP 0 011 245) beschreibt primär Verfahren zur Herstellung phosphorhaltiger Cyanhydrinderivate und, unter Hinweis auf Offenlegungsschrift DE 27 17 440 (entsprechend US 4,168,963), die schematische Umsetzung von iso-Butyl (3-cyano-3-hydroxypropyl)methylphosphinat mit Ammoniak und Wasser (ähnlich in WO 2015/173146).

US 4,692,541 offenbart Verfahren zur Herstellung von phosphorhaltigen α-Aminonitrilen durch Umsetzung von Acylalen mit Alkalimetalcyaniden unter Bedingungen der Strecker-Synthese unter Verwendung von Ammoniumchlorid (NH₄Cl) und konzentrierter wässriger Ammoniaklösung (etwa 25%ig). Dieses Dokument führt ferner aus, dass gemäß dem in US 4,521,348 (entsprechend EP 0 011 245) beschriebenen Verfahren nach der Umsetzung von iso-Butyl (3-cyano-3-acetoxypropyl)methylphosphinat mit 1.) NH₃, anschließend mit 2.) KOH und 3.) H₂SO₄ Glufosinat in einer Ausbeute von ca. 85% erhalten wird.

CN102399240A beschreibt ein verbessertes Verfahren zur Herstellung von Glufosinat-Ammonium, unter anderem auch die Umsetzung von Acroleincyanhydrinacetat mit Ethylmethylphosphinat in Gegenwart eines Radikalbildners und anschließender Aminolyse des erhaltenen Rohproduktes mit einer Mischung aus Ammoniumchlorid (NH₄Cl) und 25%igem wässrigem Ammoniak zum α-Aminonitril.

Die Verfahren aus dem Stand der Technik zur Herstellung phosphorhaltiger α-Aminonitrile aus entsprechenden phosphorhaltigen Cyanhydrinestern erlauben zwar die Herstellung der gewünschten phosphorhaltigen α-Aminonitrile in teils sehr guter Ausbeute, weisen jedoch noch Nachteile in Bezug auf eine Anwendbarkeit im technischen Produktionsmaßstab auf, wie beispielsweise zu geringe Raum-Zeit-Ausbeuten, einen hohen stöchiometrischen Einsatz von Ausgangsstoffen wie Ammoniak, einen zu hohen Anteil an Koppel- oder Nebenprodukten (und die damit einhergehende Entsorgung, z.B. Abwasserbelastung) und einen zu hohen Aufwand bei der Reinigung bzw. Isolierung der phosphorhaltigen α-Aminonitrile (z.B. durch die unerwünscht hohe Salzfracht und der dadurch notwendige Filtrationsaufwand).

Aufgabe der vorliegenden Erfindung war es daher, ein Verfahren zur Herstellung phosphorhaltiger α-Aminonitrile aus entsprechenden phosphorhaltigen Cyanhydrinestern zu finden, welches die phosphorhaltigen α-Aminonitrile gegenüber den Verfahren des Stands der Technik in zumindest vergleichbarer oder besserer chemischer Ausbeute liefert und einen, mehrere oder sämtliche der vorstehend genannten Nachteile verbessert, insbesondere eine verbesserte Raum-Zeit-Ausbeute erlaubt, einen verringerten Einsatz von Ausgangsstoffen wie Ammoniak, einen geringeren Anteil an Koppel- oder Nebenprodukten, und dabei vorzugsweise eine verbesserte Reaktionsführung ermöglicht, beispielsweise in Bezug auf wirtschaftliche, umwelt- und/oder qualitätsrelevante Aspekte.

Das nachfolgend beschriebene erfindungsgemäße Verfahren erfüllt diese Aufgabe.

Gegenstand der vorliegenden Erfindung ist ein Verfahren zur Herstellung einer Mischung enthaltend mindestens eine Verbindung der Formel (Ia) und mindestens eine Verbindung der Formel (Ib) 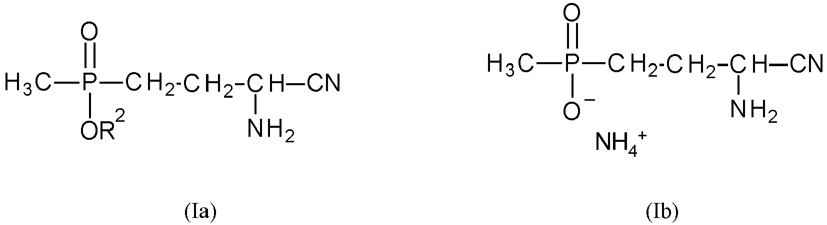 dadurch gekennzeichnet, dass eine Verbindung der Formel (II) 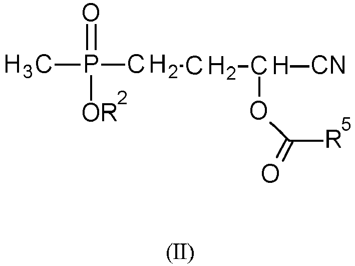 mit NH₃ umgesetzt wird, wobei insgesamt 2,0 - 3,5 molare Äquivalente an NH₃ eingesetzt werden, bezogen auf die eingesetzte Menge an Verbindungen der Formel (II),
wobei jeweils gilt:
R² bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
R⁵ bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl.

Mit den erfindungsgemäßen Verfahren, insbesondere in einer der als bevorzugt bzw. als besonders bevorzugt bezeichneten Ausgestaltungen der erfindungsgemäßen Verfahren, werden die Mischungen enthaltend die phosphorhaltigen α-Aminonitrile der Formeln (Ia) und (Ib) mit einer verbesserten Raum-Zeit-Ausbeute, einem verringerten Einsatz von Ausgangsstoffen wie Ammoniak, einer verbesserten Verfahrensökonomie (z.B. verbesserte Aufarbeitung der Reaktion durch verringerten Filtrationsaufwand), einem geringeren Anteil an Koppel- oder Nebenprodukten, und somit unter verbesserter Reaktionsführung, hergestellt.

Insgesamt entstehen in den erfindungsgemäßen Verfahren, auch in dem weiteren nachfolgend beschriebenen erfindungsgemäßen Verfahren zur Herstellung von Glufosinat, bei verringertem Einsatz von Ausgangsstoffen weniger unerwünschte Neben- und Koppelkomponenten, so dass die erfindungsgemäßen Verfahren effizienter und energiesparender sind.

Die jeweiligen Alkylreste der Reste R² und R⁵ können im Kohlenstoffgerüst jeweils geradkettig oder verzweigtkettig (verzweigt) sein.

Der Ausdruck "(C₁-C₄)-Alkyl" ist dabei die Kurzschreibweise für einen Alkylrest mit 1 bis 4 Kohlenstoffatomen, d.h. umfasst die Reste Methyl, Ethyl, 1-Propyl, 2-Propyl, 1-Butyl, 2-Butyl, 2-Methylpropyl oder tert-Butyl. Allgemeine Alkylreste mit einem größeren angegebenen Bereich von C-Atomen, z.B. "(C₁-C₆)-Alkyl" umfassen entsprechend auch gradkettige oder verzweigte Alkylreste mit einer größeren Zahl von C-Atomen, d.h. gemäß Beispiel auch die Alkylreste mit 5 und 6 C-Atomen.

Der Ausdruck "(C₄-C₅)-Alkyl" ist dabei die Kurzschreibweise für einen Alkylrest mit 4 oder 5 Kohlenstoffatomen, d.h. umfasst die Reste n-Butyl, iso-Butyl, sec-Butyl, tert-Butyl, n-Pentyl, iso-Pentyl, sec-Pentyl, bzw. neo-Pentyl.

"Halogen" bezieht vorzugsweise auf die Gruppe bestehend aus Fluor, Chlor, Brom und Iod. Haloalkyl, Haloaryl, Haloaralkyl und Halocycloalkyl bedeuten durch gleiche oder verschiedene Halogenatome, vorzugsweise aus der Gruppe Fluor, Chlor und Brom, insbesondere aus der Gruppe Fluor und Chlor, teilweise oder vollständig substituiertes Alkyl, Aryl, Aralkyl bzw. Cycloalkyl. So umfasst Haloalkyl z.B. Monohaloalkyl (= Monohalogenalkyl), Dihaloalkyl (= Dihalogenalkyl), Trihaloalkyl (= Trihalogenalkyl), oder auch Perhaloalkyl, wie beispielsweise CF₃, CHF₂, CH₂F, CF₃CF₂, CH₂FCHCl, CCl₃, CHCl₂, CH₂CH₂Cl. Entsprechendes gilt für die anderen durch Halogen substituierte Reste.

Die Herstellung der phosphorhaltigen Cyanhydrinester der Formel (II) ist dem Fachmann bekannt und kann nach literaturbekannten Verfahren erfolgen (z.B. gemäß den eingangs genannten Dokumenten).

Für die Formeln (Ia) und (II) im Zusammenhang mit den erfindungsgemäßen Verfahren gilt vorzugsweise
- R²: bedeutet (C₃-C₆)-Alkyl, und
- R⁵: bedeutet (C₁-C₄)-Alkyl, (C₆-C₈)-Aryl oder (C₅-C₈)-Cycloalkyl.

Für die Formeln (Ia) und (II) im Zusammenhang mit den erfindungsgemäßen Verfahren gilt bevorzugt
- R²: bedeutet (C₄-C₅)-Alkyl, und
- R⁵: bedeutet Methyl, Ethyl oder iso-Propyl.

Für die Formeln (Ia) und (II) im Zusammenhang mit dem erfindungsgemäßen Verfahren gilt besonders bevorzugt
- R²: bedeutet n-Butyl, iso-Butyl, n-Pentyl oder iso-Pentyl, und
- R⁵: bedeutet Methyl.

Für die Formeln (Ia) und (II) im Zusammenhang mit dem erfindungsgemäßen Verfahren gilt besonders bevorzugt
- R²: bedeutet n-Butyl, und
- R⁵: bedeutet Methyl.

Das erfindungsgemäße Verfahren wird vorzugsweise in der Weise durchgeführt, dass insgesamt 2,0 bis 3,0 molare Äquivalente an NH₃ eingesetzt werden, bezogen auf die eingesetzte Menge an Verbindungen der Formel (II).

Das erfindungsgemäße Verfahren wird bevorzugt in der Weise durchgeführt, dass insgesamt 2,3 bis 2,8 molare Äquivalente an NH₃ eingesetzt werden, bezogen auf die eingesetzte Menge an Verbindungen der Formel (II).

Das erfindungsgemäße Verfahren wird besonders bevorzugt in der Weise durchgeführt, dass insgesamt 2,4 bis 2,7 molare Äquivalente an NH₃ eingesetzt werden, bezogen auf die eingesetzte Menge an Verbindungen der Formel (II).

Das erfindungsgemäße Verfahren wird vorzugsweise in der Weise durchgeführt, dass das eingesetzte NH₃ im Wesentlichen wasserfrei ist, da dabei die eingangs genannten Vorteile der erfindungsgemäßen Verfahren, insbesondere in Bezug auf eine verbesserte Raum-Zeit-Ausbeute, einen verringerten Einsatz von Ausgangsstoffen wie Ammoniak, einen geringeren Anteil an Koppel- oder Nebenprodukten, und eine verbesserte Reaktionsführung, in besonderem Maße erzielt werden können.

Im Zusammenhang mit den erfindungsgemäßen Verfahren ist das eingesetzte NH₃ vorzugsweise im Wesentlichen wasserfrei, d.h. dass der Wassergehalt im eingesetzten NH₃ bei maximal 1 Gew.-% liegt, und regelmäßig im Bereich von 0,1 - 0,5 Gew.-% liegt.

Das erfindungsgemäße Verfahren wird vorzugsweise in der Weise durchgeführt, dass die Umsetzung ohne Zugabe von Ammoniumchlorid (NH₄Cl) erfolgt.

In eigenen Versuchen hat sich gezeigt, dass Zugabe von Ammoniumchlorid (NH₄Cl) keine vorteilhaften Auswirkungen auf das erfindungsgemäße Verfahren hat und insoweit entbehrlich ist. Da die weitere Herstellung von Glufosinat und seinen Salzen nach den literaturbekannten Verfahren in der Regel einen Filtrationsschritt zur Abtrennung von im Reaktionsverlauf gebildeten, salzförmigen Neben- oder Kopplungsprodukten beinhaltet, bedeutet ein Verzicht auf den Zusatz von Ammoniumchlorid in erfindungsgemäßen Verfahren eine weiter verbesserte Reaktionsführung, besonders hinsichtlich einer späteren Filtration.

Das erfindungsgemäße Verfahren wird vorzugsweise in der Weise durchgeführt, dass eine oder mehrere Verbindungen der Formel (II) wie vorstehend definiert, vorzugsweise eine oder mehrere der als bevorzugt bzw. besonders bevorzugt definierten Verbindungen der Formel (II), in dem Reaktor in flüssiger Form vorgelegt werden, und NH₃ zugegeben wird.

Diese Zugabe kann dabei in einer bevorzugten Ausgestaltung in der Weise erfolgen, dass NH₃, welches unter den Verfahrensbedingungen in der Regel in gasförmiger, flüssiger oder teils gasförmiger und teils flüssiger Form vorliegt, teilweise oder vollständig unterhalb der Oberfläche der Flüssigkeitsphase enthaltend die vorgelegte(n) Verbindung(en) der Formel (II) eindosiert wird.

Das erfindungsgemäße Verfahren wird vorzugsweise in der Weise durchgeführt, dass die Umsetzung bei einer Temperatur im Bereich von 0 bis 70 °C erfolgt, bevorzugt bei einer Temperatur im Bereich von 10 bis 60 °C.

Das erfindungsgemäße Verfahren wird bevorzugt in der Weise durchgeführt, dass die Umsetzung bei einer Temperatur im Bereich von 15 bis 50 °C erfolgt, besonders bevorzugt bei einer Temperatur im Bereich von 20 bis 45 °C.

Die erfindungsgemäß gebildeten Mischungen enthaltend die phosphorhaltigen α-Aminonitrile der Formeln (Ia) und (Ib) können als Ausgangsstoffe zur Synthese von phosphorhaltigen Aminosäuren wie beispielsweise Glufosinat verwendet werden (ein solcher Syntheseweg wird weiter unten näher beschrieben).

Es ist ferner möglich, das erfindungsgemäße Verfahren unter Überdruck oder unter vermindertem Druck durchzuführen.

Das erfindungsgemäße Verfahren wird vorzugsweise in der Weise geführt, dass die Umsetzung bei einem absoluten Druck (pabs) von maximal 5 bar erfolgt, bevorzugt bei einem absoluten Druck von maximal 4 bar, weiter bevorzugt bei einem absoluten Druck im Bereich von 970 mbar bis 3 bar.

Je nach Wahl der Reaktionsparameter (insbesondere molares Mengenverhältnis von Verbindungen der Formel (II) und NH₃, die in der Umsetzung vorhandene Menge an Wasser und damit zusammenhängend die Reaktionstemperatur und Reaktionsdauer) enthält die erfindungsgemäß hergestellte Mischung unterschiedliche Anteile an Verbindungen der Formel (Ia) und der Formel (Ib). Regelmäßig liegt der Anteil der Verbindung (Ia) bei 10 bis 90 mol.-%, zumeist liegt der Anteil der Verbindung (Ia) bei 20 bis 80 mol.-%, jeweils bezogen auf die Gesamtmenge an Verbindungen der Formeln (Ia) und (Ib).

Unter den vorliegend bevorzugten bzw. besonders bevorzugten Reaktionsbedingungen beträgt der Anteil der Verbindung (Ia) regelmäßig 30 bis 80 mol.-%, häufig liegt der Anteil der Verbindung (Ia) bei 40 bis 80 mol.-%, und zumeist liegt der Anteil der Verbindung (Ia) bei 50 bis 80 mol.-%, jeweils bezogen auf die Gesamtmenge an Verbindungen der Formeln (Ia) und (Ib).

Je nach Reaktionsdurchführung, insbesondere Reaktionsdauer und eingesetzte Menge an NH₃, kann der Anteil der Verbindung (Ia) bei 60 mol.-% oder mehr, bzw. auch 70 mol.-% oder mehr liegen, jeweils bezogen auf die Gesamtmenge an Verbindungen der Formeln (Ia) und (Ib).

Das erfindungsgemäße Verfahren zur Herstellung der Mischungen enthaltend die phosphorhaltigen α-Aminonitrile der Formeln (Ia) und (Ib) gilt bevorzugt für die Formeln (Ia) und (II), in denen
- R²: (C₄-C₅)-Alkyl bedeutet, und
- R⁵: Methyl, Ethyl oder iso-Propyl bedeutet,
wobei
insgesamt 2,0 bis 3,0 molare Äquivalente an NH₃ eingesetzt werden, bezogen auf die eingesetzte Menge an Verbindungen der Formel (II),
die Umsetzung bei einer Temperatur im Bereich von 0 bis 70 °C erfolgt, bevorzugt bei einer Temperatur im Bereich von 10 bis 60 °C,
wobei vorzugsweise zusätzlich einer, mehrere oder sämtlich der folgenden Parameter gelten:
die Umsetzung erfolgt ohne Zugabe von Ammoniumchlorid (NH₄Cl),
das eingesetzte NH₃ ist im Wesentlichen wasserfrei, und/oder
die Umsetzung erfolgt bei einem absoluten Druck (pabs) von maximal 5 bar.

Das erfindungsgemäße Verfahren zur Herstellung der Mischungen enthaltend die phosphorhaltigen α-Aminonitrile der Formeln (Ia) und (Ib) gilt bevorzugt für die Formeln (Ia) und (II), in denen
- R²: (C₄-C₅)-Alkyl bedeutet, und
- R⁵: Methyl, Ethyl oder iso-Propyl bedeutet,
wobei
insgesamt 2,0 bis 3,0 molare Äquivalente an NH₃ eingesetzt werden, bezogen auf die eingesetzte Menge an Verbindungen der Formel (II),
die Umsetzung bei einer Temperatur im Bereich von 10 bis 60 °C erfolgt,
die Umsetzung ohne Zugabe von Ammoniumchlorid (NH₄Cl) erfolgt,
das eingesetzte NH₃ im Wesentlichen wasserfrei ist, und
die Umsetzung bei einem absoluten Druck (pabs) von maximal 5 bar erfolgt.

Das erfindungsgemäße Verfahren zur Herstellung der Mischungen enthaltend die phosphorhaltigen α-Aminonitrile der Formeln (Ia) und (Ib) gilt besonders bevorzugt für die Formeln (Ia) und (II), in denen
- R²: n-Butyl, iso-Butyl, n-Pentyl oder iso-Pentyl (dabei wiederum bevorzugt n-Butyl) bedeutet, und
- R⁵: Methyl bedeutet,
wobei
insgesamt 2,3 bis 2,8 molare Äquivalente an NH₃ eingesetzt werden, bezogen auf die eingesetzte Menge an Verbindungen der Formel (II),
die Umsetzung bei einer Temperatur im Bereich von 15 bis 50 °C erfolgt, besonders bevorzugt bei einer Temperatur im Bereich von 20 bis 45 °C,
wobei vorzugsweise zusätzlich einer, mehrere oder sämtlich der folgenden Parameter gelten:
die Umsetzung erfolgt ohne Zugabe von Ammoniumchlorid (NH₄Cl),
das eingesetzte NH₃ ist im Wesentlichen wasserfrei, und/oder
die Umsetzung erfolgt bei einem absoluten Druck (pabs) von maximal 4 bar.

Das erfindungsgemäße Verfahren zur Herstellung der Mischungen enthaltend die phosphorhaltigen α-Aminonitrile der Formeln (Ia) und (Ib) gilt besonders bevorzugt für die Formeln (Ia) und (II), in denen
- R²: n-Butyl, iso-Butyl, n-Pentyl oder iso-Pentyl (dabei wiederum bevorzugt n-Butyl) bedeutet, und
- R⁵: Methyl bedeutet,
wobei
insgesamt 2,3 bis 2,8 molare Äquivalente an NH₃ eingesetzt werden, bezogen auf die eingesetzte Menge an Verbindungen der Formel (II),
die Umsetzung bei einer Temperatur im Bereich von 20 bis 45 °C erfolgt,
die Umsetzung ohne Zugabe von Ammoniumchlorid (NH₄Cl) erfolgt,
das eingesetzte NH₃ im Wesentlichen wasserfrei ist, und
die Umsetzung bei einem absoluten Druck (pabs) von maximal 4 bar erfolgt.

Das erfindungsgemäße Verfahren zur Herstellung der Mischungen enthaltend die phosphorhaltigen α-Aminonitrile der Formeln (Ia) und (Ib) gilt ganz besonders bevorzugt für die Formeln (Ia) und (II), in denen
- R²: n-Butyl, iso-Butyl, n-Pentyl oder iso-Pentyl (dabei wiederum bevorzugt n-Butyl) bedeutet, und
- R⁵: Methyl bedeutet,
wobei
insgesamt 2,4 bis 2,7 molare Äquivalente an NH₃ eingesetzt werden, bezogen auf die eingesetzte Menge an Verbindungen der Formel (II),
die Umsetzung bei einer Temperatur im Bereich von 20 bis 45 °C erfolgt,
die Umsetzung ohne Zugabe von Ammoniumchlorid (NH₄Cl) erfolgt,
das eingesetzte NH₃ im Wesentlichen wasserfrei ist, und
die Umsetzung bei einem absoluten Druck (pabs) im Bereich von 970 mbar bis 3 bar erfolgt.

Das erfindungsgemäße Verfahren kann in einem optionalen Verdünnungsmittel durchgeführt werden.

Als optionale Verdünnungsmittel sind grundsätzlich Wasser oder verschiedene unter den Reaktionsbedingungen inerte organische Lösungsmittel einsetzbar. Bevorzugt wird das erfindungsgemäße Verfahren ohne Verwendung bzw. Zugabe solcher Verdünnungsmittel durchgeführt, auch im Hinblick auf die Raum-Zeit-Ausbeute (wie oben bereits erwähnt).

Die nachfolgende schematische Darstellung in Schema 1 veranschaulicht die Umsetzung von Verbindungen der Formel (II) zu Verbindungen der Formeln (Ia) und (Ib), wobei R² und R⁵ die jeweils vorstehend genannte Bedeutung haben, und die Koppelprodukte (Wasser und Amid R⁵CONH₂) sowie die Nebenkomponenten (hauptsächlich Alkohol R²OH und Ester R⁵COOR²).

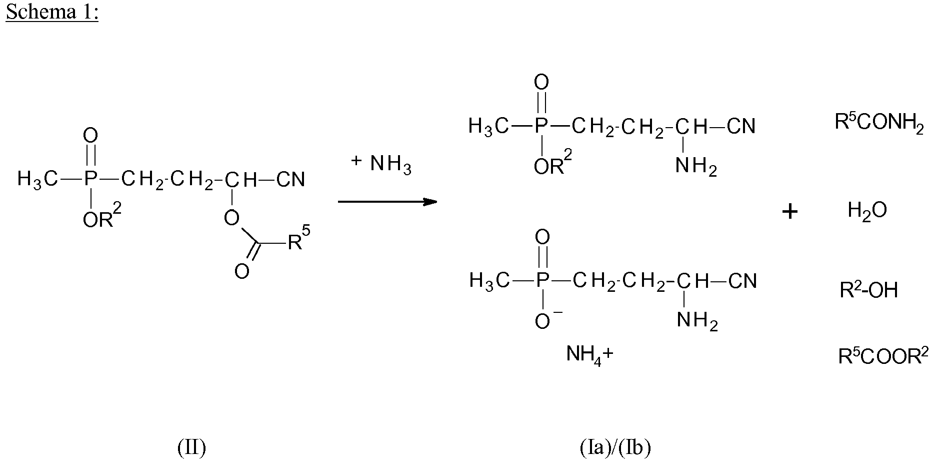

Das erfindungsgemäße Verfahren kann sowohl in diskontinuierlicher Prozessführung (z.B. in semi-Batch Fahrweise) als auch in kontinuierlicher Prozessführung (z.B. im kontinuierlich betriebenen Rührkessel) durchgeführt werden.

Unter einer kontinuierlichen Prozessführung im Sinne der vorliegenden Erfindung ist zu verstehen, dass Verbindungen (d.h. Edukte wie Verbindungen der Formel (II) und Ammoniak) in den Reaktor eingebracht werden (Eintrag / Zulauf), und gleichzeitig, aber davon räumlich getrennt, Verbindungen (d.h. Produkte wie Verbindungen der Formeln (Ia) und (Ib)) aus dem Reaktor ausgebracht werden (Austrag / Ablauf).

Bei einer diskontinuierlichen Prozessführung hingegen erfolgen die Schritte Eintrag von Edukten (d.h. von Verbindungen der Formel (II) und Ammoniak), Umsetzung (d.h. Reaktion der Edukte), und Austrag der Produkte (d.h. Produkte wie Verbindungen der Formeln (Ia) und (Ib)) aus dem Reaktor zeitlich nacheinander oder nur in einzelnen Abschnitten überlappend.

In einer bevorzugten Ausgestaltung wird das erfindungsgemäße Verfahren in Semi-Batch-Fahrweise durchgeführt, wobei der Eintrag von NH₃ im Wesentlichen bei gleichzeitig ablaufender Reaktion unter Bildung von Mischungen enthaltend Verbindungen der Formeln (Ia) und (Ib) erfolgt.

Bei Glufosinat-Salzen im Rahmen der vorliegenden Erfindung handelt es sich vorzugsweise um Ammonium-Salze, Phosphonium-Salze, Sulfonium-Salze, Alkali-Salze und Erdalkali-Salze von Glufosinat sowie Salze von Glufosinat mit Halogenwasserstoffsäuren oder Schwefelsäure.

Insbesondere bevorzugt im Rahmen der vorliegenden Erfindung sind Glufosinat, Glufosinat-Natrium bzw. Glufosinat-Ammonium sowie Glufosinat-Hydrochlorid.

In einem weiteren Aspekt betrifft die vorliegende Erfindung die Herstellung von Glufosinat 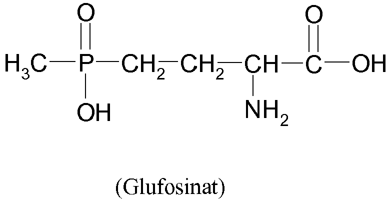 oder Glufosinat-Salzen, dadurch gekennzeichnet, dass in diesem Verfahren eine Mischung enthaltend mindestens eine Verbindung der Formel (Ia) und mindestens eine Verbindung der Formel (Ib) eingesetzt wird 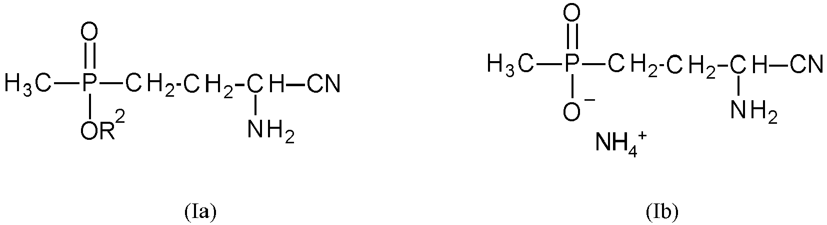 wobei R² die vorstehend erfindungsgemäß definierte Bedeutung hat, bevorzugt die vorstehend als bevorzugt definierte Bedeutung, und besonders bevorzugt die vorstehend als besonders bevorzugt definierte Bedeutung, und

die Herstellung dieser eingesetzten Mischung gemäß der erfindungsgemäßen Verfahren erfolgt, dabei vorzugsweise gemäß einer der vorstehend als bevorzugt bzw. besonders bevorzugt bezeichneten Ausgestaltungen.

Ferner betrifft die vorliegende Erfindung ein Verfahren zur Herstellung von Glufosinat bzw. von Glufosinat-Salzen, insbesondere von Glufosinat, Glufosinat-Natrium, Glufosinat-Hydrochlorid oder Glufosinat-Ammonium, umfassend die folgenden Schritte (a) und (b):
(a) Herstellung einer Mischung enthaltend mindestens eine Verbindung der Formel (Ia) und mindestens eine Verbindung der Formel (Ib), wie vorstehend erfindungsgemäß definiert, bevorzugt wie vorstehend als bevorzugt definiert, und besonders bevorzugt wie vorstehend als besonders bevorzugt definiert, wobei die Herstellung dieser Mischung gemäß der erfindungsgemäßen Verfahren erfolgt, dabei vorzugsweise gemäß einer der vorstehend als bevorzugt bzw. als besonders bevorzugt bezeichneten Ausgestaltungen,
   und
(b) Umsetzung der in Schritt (a) hergestellten Mischung enthaltend mindestens eine Verbindung der Formel (Ia) und mindestens eine Verbindung der Formel (Ib) zu Glufosinat bzw. zu Glufosinat-Salzen, insbesondere zu Glufosinat, Glufosinat-Natrium, Glufosinat-Hydrochlorid oder Glufosinat-Ammonium,
   oder
(b) Verwendung der in Schritt (a) hergestellten Mischung enthaltend mindestens eine Verbindung der Formel (Ia) und mindestens eine Verbindung der Formel (Ib) zur Herstellung von Glufosinat bzw. von Glufosinat-Salzen, insbesondere von Glufosinat, Glufosinat-Natrium, Glufosinat-Hydrochlorid oder Glufosinat-Ammonium.

Das erfindungsgemäße Verfahren, bevorzugt in einer der als bevorzugt bzw. als besonders bevorzugt bezeichneten Ausgestaltungen, zur Herstellung von Glufosinat bzw. von Glufosinat-Salzen wird dabei vorzugsweise in der Weise geführt, dass in Schritt (b) eine saure Verseifung der Nitrilgruppe und der Phosphinsäureestergruppe in Verbindungen der Formel (Ia) und eine saure Verseifung der Nitrilgruppe in Verbindungen der Formel (Ib) erfolgt, wobei diese Verseifungen vorzugsweise mit einer Mineralsäure erfolgen, dabei wiederum bevorzugt mit wässriger Chlorwasserstoffsäure (Salzsäure).

Dieser letztgenannte Verfahrensschritt des erfindungsgemäßen Verfahrens zur Herstellung von Glufosinat und/oder Glufosinat-Salzen kann in bekannter Weise erfolgen, wie beispielsweise in CN102399240A beschrieben.

Schließlich betrifft die vorliegende Erfindung auch die Verwendung einer gemäß einem erfindungsgemäßen Verfahren (bevorzugt in einer der als bevorzugt bzw. als besonders bevorzugt bezeichneten Ausgestaltungen) hergestellten Mischung, enthaltend jeweils mindestens eine Verbindung der Formeln (Ia) und (Ib), wie vorstehend definiert, zur Herstellung von Glufosinat bzw. von Glufosinat-Salzen, insbesondere von Glufosinat, Glufosinat-Natrium, Glufosinat-Hydrochlorid oder Glufosinat-Ammonium.

Die nachfolgenden Beispiele veranschaulichen die vorliegende Erfindung.

### Beispiele:

Sofern nicht anders angegeben beziehen sich alle Angaben auf das Gewicht.

Verwendete Abkürzungen:
ACM: 3-[n-Butoxy(methyl)phosphoryl]-1-eyanopropylacetat, Verbindung der Formel (II)
AMN: n-Butyl (3-amino-3-cyanopropyl)-methylphosphinat, Verbindung der Formel (Ia)
Geräte: 500 ml Autoklav mit Innenthermometer und Mantelkühlung, Rührer, optional HPLC-Pumpe und IR-Sonde (zur Reaktionsverfolgung).

### Beispiel 1:

In dem mit Stickstoffgas gespülten 500 ml Autoklaven wurden 9,6 g Wasser und 9,3 g Ammoniumchlorid (entsprechend 0,45 molare Äquivalente, bezogen auf die eingesetzte Menge an ACM) vorgelegt und unter Rühren (600 rpm) 57,8 g wässrige Ammoniaklösung (33%ig in Wasser, entsprechend 2,9 molare Äquivalente, bezogen auf die eingesetzte Menge an ACM) zugegeben. Anschließend wurden 100,92 g ACM mittels HPLC-Pumpe in den Autoklaven gepumpt, wobei die Innentemperatur von anfangs 20 °C auf etwa 22 °C anstieg. Nach beendeter Zugabe von ACM wurde noch 20 Minuten nachgerührt, per IR-Sonde war keine Änderung der Zusammensetzung des Reaktionsgemischs mehr zu verzeichnen.

Gemäß ³¹P-NMR lag der Anteil an den gewünschtem Verbindungen der Formel (Ia) und (Ib) bei 90% (das Verhältnis der Mengen der Verbindungen der Formel (Ia) und (Ib) gemäß NMR lag bei 69 : 31).

³¹P-NMR (162 MHz, D₂O): δ (ppm) = 63,06/63,05 ppm (69%) und 42,91/42,84 ppm (31%).

### Beispiel 2:

Der Wassergehalt des eingesetzten NH₃ lag bei 0,2 bis 0,25 Gew.-%.

In dem mit NH₃-Gas gespülten 500 ml Autoklaven wurden 252,9 g an ACM (Gehalt an ACM: 92%) vorgelegt und bei 20 °C unter Rühren (800 rpm) 42,3 g NH₃-Gas (entsprechend 2,6 molare Äquivalente, bezogen auf die eingesetzte Menge an ACM) innerhalb von 22 Minuten in den Autoklaven geleitet, wobei die Innentemperatur auf 35 °C anstieg und auf 35 °C mittels Mantelkühlung gehalten wurde. Nach 73 Minuten wurde die Reaktion beendet, per IR-Sonde war keine Änderung der Zusammensetzung des Reaktionsgemischs mehr zu verzeichnen.

Das Reaktionsgemisch aus dem Autoklaven wurde in 400 mL 32%iger Salzsäure abgelassen und die resultierende Mischung 7 Stunden bei 110 °C gerührt, wobei leichtflüchtige Komponenten wie Wasser, Essigsäure, n-Butylchlorid, n-Butanol und n-Butylacetat teilweise abdestilliert wurden. Anschließend wurde mit wässriger Ammoniaklösung neutralisiert. Der Gehalt an Glufosinat-Ammonium in der erhaltenen Lösung lag bei 15,9%, entsprechend einer Ausbeute von 91,5% der Theorie bezogen auf die eingesetzte Menge an ACM.

Die Bestimmung des Gehaltes an Glufosinat-Ammonium wurde aus einer mit Ammoniumhydroxid-Lösung neutralisierten Probe per HPLC mit Glufosinat-Ammonium als externen Standard und wässriger 0,1 molarer KH₂PO₄-Lösung als Eluent durchgeführt.

### Beispiel 3:

Der Wassergehalt des eingesetzten NH₃ lag bei 0,2 bis 0,25 Gew.-%.

In einem 0.5-Liter-Autoklaven mit Mantelkühlung wurden 252,8 g ACM (Gehalt an ACM 90,7%) vorgelegt und der Autoklav mit Stickstoff gespült. Bei einer Innentemperatur von 22 °C wurden ca. 8 g gasförmiges NH₃ ohne Kühlung unter Rühren (900 rpm) auf die Lösung aufgepresst. Dabei fand ein Temperaturanstieg auf 35 °C statt. Anschließend wurde die Innentemperatur über die Manteltemperatur auf 33 bis 35 °C geregelt (Kühlung über Kryostat) und innerhalb von 38 Minuten ca. 34,4 g NH₃ als Gas zugegeben (insgesamt 42,4 g, entsprechen 2,6 Äquivalente.). Der maximale Innendruck lag bei 3,5 bar absolutem Druck (entsprechend 2,5 bar Überdruck). Bei 34 °C Innentemperatur wurde weitere 96 min nachgerührt und diese Reaktionsmischung in 507 g Salzsäure (32%ig in Wasser, entsprechend 4,6 Äquivalente) abgelassen (Kühlung über Wasserbad). Dieses Gemisch wurde danach 7 Stunden unter Rückfluss gerührt und dabei ca. 200 mL Destillat abdestilliert. Die Reaktionsmischung wurde dann auf 22°C abgekühlt und mit Ammoniaklösung (25%ig in Wasser) auf einen pH-Wert von 6,5 gebracht und mit Wasser verdünnt (Gesamtgewicht der Lösung 1026,2 g; Gehalt (HPLC) an Glufosinat-Ammonium: 16,5%, entsprechend 97% der Theorie bezogen auf die eingesetzte Menge an ACM.)

Zur Isolierung von Glufosinat-Ammonium wurde mit der Lösung in ähnlicher Weise verfahren wie in CN102399240A in Beispiel 7 beschrieben: Dazu wurde die Lösung eingeengt, mit Methanol versetzt, ausgefallenes Ammoniumchlorid abfiltriert, die Mutterlauge im Vakuum eingeengt und nochmals mit Methanol aufgerührt und abgekühlt. Das auskristallisierte Produkt wurde abfiltriert und mit Methanol nachgewaschen. Nach Trocknen wurden 192,8 g an Feststoff erhalten (Gehalt (HPLC) an Glufosinat-Ammonium: 81,4%, entsprechend 90,3% der Theorie bezogen auf die eingesetzte Menge an ACM. Zur Überprüfung des Gehaltes an Glufosinat-Ammonium wurde aus diesem Feststoff mit Wasser eine 50 Gew.-%ige Lösung hergestellt (Gehalt (HPLC) an Glufosinat-Ammonium: 40,9% entsprechend 90,6% der Theorie).

³¹P-NMR (162 MHz, D₂O): δ (ppm) = 56 ppm.

## Patentansprüche

1. Verfahren zur Herstellung einer Mischung enthaltend mindestens eine Verbindung der Formel (Ia) und mindestens eine Verbindung der Formel (Ib) 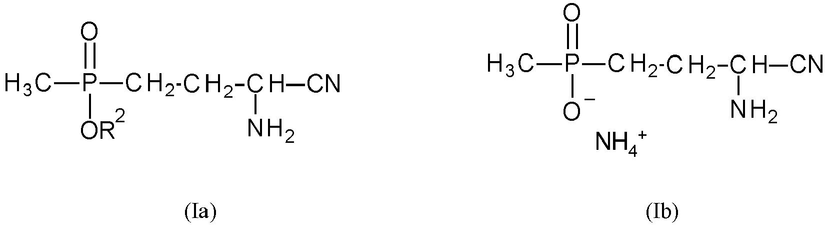 **dadurch gekennzeichnet, dass** eine Verbindung der Formel (II) 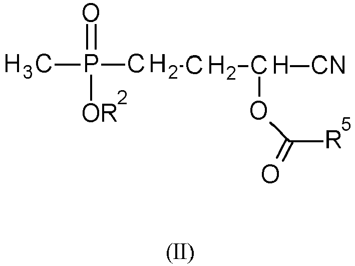 mit NH₃ umgesetzt wird, wobei insgesamt 2,0 - 3,5 molare Äquivalente an NH₃ eingesetzt werden, bezogen auf die eingesetzte Menge an Verbindungen der Formel (II),
wobei jeweils gilt:
R² bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇-C₁₀)-Haloaralkyl, (C₄-C₁₀)-Cycloalkyl oder (C₄-C₁₀)-Halocycloalkyl,
R⁵ bedeutet (C₁-C₁₂)-Alkyl, (C₁-C₁₂)-Haloalkyl, (C₆-C₁₀)-Aryl, (C₆-C₁₀)-Haloaryl, (C₇-C₁₀)-Aralkyl, (C₇₋C₁₀)-Haloaralkyl, (C₄-C₁₀)-Cycloalkyl oder (C₄-C₁₀)-Halocycloalkyl.

2. Verfahren nach Anspruch 1, **dadurch gekennzeichnet, dass**
R² (C₃-C₆)-Alkyl bedeutet,
R⁵ (C₁-C₄)-Alkyl, (C₆-C₈)-Aryl oder (C₅-C₈)-Cycloalkyl bedeutet.

3. Verfahren nach Anspruch 1 oder 2, **dadurch gekennzeichnet, dass**
R² (C₄-C₅)-Alkyl bedeutet,
R⁵ Methyl, Ethyl oder iso-Propyl bedeutet.

4. Verfahren nach einem der Ansprüche 1 bis 3, **dadurch gekennzeichnet, dass** insgesamt 2,0 bis 3,0 molare Äquivalente an NH₃ eingesetzt werden, bezogen auf die eingesetzte Menge an Verbindungen der Formel (II).

5. Verfahren nach einem der Ansprüche 1 bis 4, **dadurch gekennzeichnet, dass** insgesamt 2,3 bis 2,8 molare Äquivalente an NH₃ eingesetzt werden, bezogen auf die eingesetzte Menge an Verbindungen der Formel (II).

6. Verfahren nach einem der Ansprüche 1 bis 5, **dadurch gekennzeichnet, dass** das eingesetzte NH₃ im Wesentlichen wasserfrei ist und der Wassergehalt im eingesetzten NH₃ bei maximal 1 Gew.-% liegt.

7. Verfahren nach einem der Ansprüche 1 bis 6, **dadurch gekennzeichnet, dass** die Umsetzung ohne Zugabe von Ammoniumchlorid (NH₄Cl) erfolgt.

8. Verfahren nach einem der Ansprüche 1 bis 7, **dadurch gekennzeichnet, dass** eine oder mehrere Verbindungen der Formel (II) wie in einem der Ansprüche 1 bis 3 definiert in dem Reaktor in flüssiger Form vorgelegt werden, und NH₃ zugegeben wird.

9. Verfahren nach einem der Ansprüche 1 bis 8, **dadurch gekennzeichnet, dass** die Umsetzung bei einer Temperatur im Bereich von 0 bis 70 °C erfolgt, bevorzugt bei einer Temperatur im Bereich von 10 bis 60 °C.

10. Verfahren nach einem der Ansprüche 1 bis 8, **dadurch gekennzeichnet, dass** die Umsetzung bei einer Temperatur im Bereich von 15 bis 50 °C erfolgt, bevorzugt bei einer Temperatur im Bereich von 20 bis 45 °C.

11. Verfahren nach einem der Ansprüche 1 bis 10, **dadurch gekennzeichnet, dass** die Umsetzung bei einem absoluten Druck von maximal 5 bar erfolgt, bevorzugt bei einem absoluten Druck von maximal 4 bar, weiter bevorzugt bei einem absoluten Druck im Bereich von 970 mbar bis 3 bar.

12. Verfahren zur Herstellung von Glufosinat 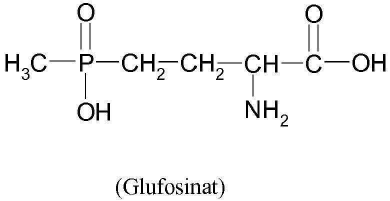 oder Glufosinat-Salzen, **dadurch gekennzeichnet, dass** in diesem Verfahren eine Mischung enthaltend mindestens eine Verbindung der Formel (Ia) und mindestens eine Verbindung der Formel (Ib) eingesetzt wird 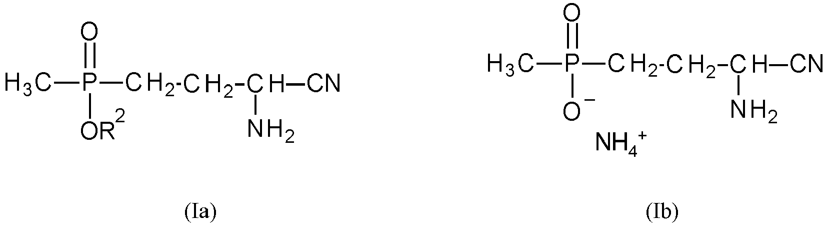 wobei R² die in einem der Ansprüche 1 bis 3 genannte Bedeutung hat, und
die Herstellung dieser eingesetzten Mischung gemäß einem in den Ansprüchen 1 bis 11 definierten Verfahren erfolgt.

13. Verfahren zur Herstellung von Glufosinat bzw. von Glufosinat-Salzen, insbesondere von Glufosinat, Glufosinat-Natrium, Glufosinat-Hydrochlorid oder Glufosinat-Ammonium, umfassend die folgenden Schritte (a) und (b):
(a) Herstellung einer gemäß einem in den Ansprüchen 1 bis 11 definierten Verfahren hergestellte Mischung enthaltend mindestens eine Verbindung der Formel (Ia) und mindestens eine Verbindung der Formel (Ib), wie in einem der Ansprüche 1 bis 3 definiert,
und
(b) Umsetzung der in Schritt (a) hergestellten Mischung enthaltend mindestens eine Verbindung der Formel (Ia) und mindestens eine Verbindung der Formel (Ib) zu Glufosinat bzw. zu Glufosinat-Salzen, insbesondere zu Glufosinat, Glufosinat-Natrium, Glufosinat-Hydrochlorid oder Glufosinat-Ammonium,
oder
(b) Verwendung der in Schritt (a) hergestellten Mischung enthaltend mindestens eine Verbindung der Formel (Ia) und mindestens eine Verbindung der Formel (Ib) zur Herstellung von Glufosinat bzw. von Glufosinat-Salzen, insbesondere von Glufosinat, Glufosinat-Natrium, Glufosinat-Hydrochlorid oder Glufosinat-Ammonium.

14. Verfahren nach Anspruch 13, **dadurch gekennzeichnet, dass** in Schritt (b) eine saure Verseifung der Nitrilgruppe und der Phosphinsäureestergruppe in Verbindungen der Formel (Ia) und eine saure Verseifung der Nitrilgruppe in Verbindungen der Formel (Ib) erfolgt, wobei diese Verseifungen vorzugsweise mit einer Mineralsäure erfolgen, dabei wiederum bevorzugt mit wässriger HCl (Salzsäure).

15. Verwendung einer gemäß einem in den Ansprüchen 1 bis 11 definierten Verfahren hergestellte Mischung enthaltend mindestens eine Verbindung der Formel (Ia) und mindestens eine Verbindung der Formel (Ib), wie in einem der Ansprüche 1 bis 3 definiert, zur Herstellung von Glufosinat bzw. von Glufosinat-Salzen, insbesondere von Glufosinat, Glufosinat-Natrium, Glufosinat-Hydrochlorid oder Glufosinat-Ammonium.

## Claims

1. A process for preparing a mixture comprising at least one compound of the formula (Ia) and at least one compound of the formula (Ib) 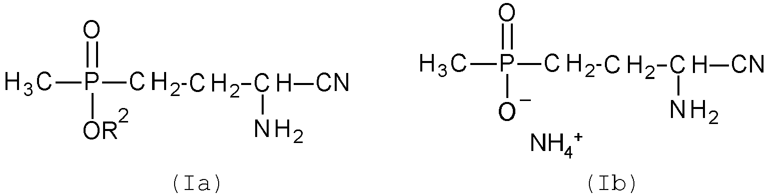 wherein a compound of the formula (II) 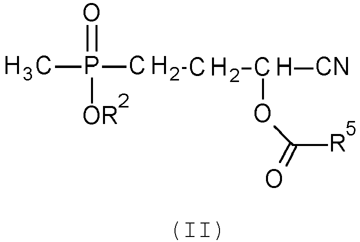 is reacted with NH₃, using a total amount of 2.0-3.5 molar equivalents of NH₃, based on the amount of compounds of the formula (II) used,
where in each case:
R² is (C₁-C₁₂) -alkyl, (C₁-C₁₂) -haloalkyl, (C₆-C₁₀) -aryl, (C₆-C₁₀) -haloaryl, (C₇-C₁₀) -aralkyl, (C₇-C₁₀) -haloaralkyl, (C₄-C₁₀) -cycloalkyl or (C₄-C₁₀) -halocycloalkyl,
R⁵ is (C₁-C₁₂) -alkyl, (C₁-C₁₂) -haloalkyl, (C₆-C₁₀) -aryl, (C₆-C₁₀) -haloaryl, (C₇-C₁₀) -aralkyl, (C₇-C₁₀) -haloaralkyl, (C₄-C₁₀) -cycloalkyl or (C₄-C₁₀) -halocycloalkyl.

2. The process according to claim 1, wherein
R² is (C₃-C₆) -alkyl,
R⁵ is (C₁-C₄) -alkyl, (C₆-C₈) -aryl or (C₅-C₈) -cycloalkyl.

3. The process according to claim 1 or 2, wherein
R² is (C₄-C₅) -alkyl,
R⁵ is methyl, ethyl or isopropyl.

4. The process according to any of claims 1 to 3, wherein a total amount of 2.0 to 3.0 molar equivalents of NH₃ is used, based on the amount of compounds of the formula (II) used.

5. The process according to any of claims 1 to 4, wherein a total amount of 2.3 to 2.8 molar equivalents of NH₃ is used, based on the amount of compounds of the formula (II) used.

6. The process according to any of claims 1 to 5, wherein the NH₃ used is essentially anhydrous and the water content in the NH₃ used is not more than 1% by weight.

7. The process according to any of claims 1 to 6, wherein the reaction is effected without addition of ammonium chloride (NH₄Cl).

8. The process according to any of claims 1 to 7, wherein one or more compounds of the formula (II) as defined in any of claims 1 to 3 are initially charged in liquid form in the reactor, and NH₃ is added.

9. The process according to any of claims 1 to 8, wherein the reaction is effected at a temperature in the range from 0 to 70°C, preferably at a temperature in the range from 10 to 60°C.

10. The process according to any of claims 1 to 8, wherein the reaction is effected at a temperature in the range from 15 to 50°C, preferably at a temperature in the range from 20 to 45°C.

11. The process according to any of claims 1 to 10, wherein the reaction is effected at an absolute pressure of not more than 5 bar, preferably at an absolute pressure of not more than 4 bar, further preferably at an absolute pressure in the range from 970 mbar to 3 bar.

12. A process for preparing glufosinate 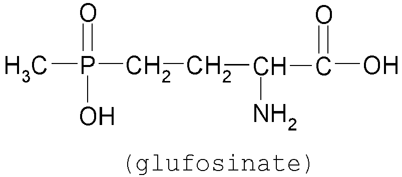 or glufosinate salts, wherein, in this process, a mixture comprising at least one compound of the formula (Ia) and at least one compound of the formula (Ib) is used 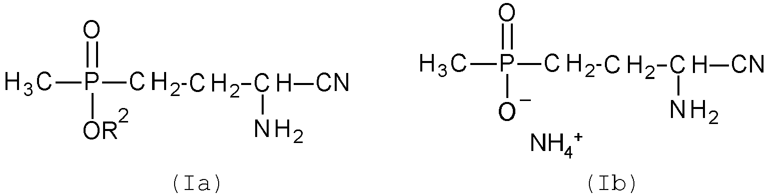 where R² has the definition given in any of claims 1 to 3, and
this mixture used is prepared by the process defined in claims 1 to 11.

13. A process for preparing glufosinate or glufosinate salts, especially glufosinate, glufosinate-sodium, glufosinate hydrochloride or glufosinate-ammonium, comprising the following steps (a) and (b):
(a) preparing a mixture prepared by a process defined in claims 1 to 11 and comprising at least one compound of the formula (Ia) and at least one compound of the formula (Ib) as defined in any of claims 1 to 3,
and
(b) converting the mixture prepared in step (a) and comprising at least one compound of the formula (Ia) and at least one compound of the formula (Ib) to glufosinate or to glufosinate salts, especially to glufosinate, glufosinate-sodium, glufosinate hydrochloride or glufosinate-ammonium,
or
(b) using the mixture prepared in step (a) and comprising at least one compound of the formula (Ia) and at least one compound of the formula (Ib) for preparation of glufosinate or of glufosinate salts, especially of glufosinate, glufosinate-sodium, glufosinate hydrochloride or glufosinate-ammonium.

14. The process according to claim 13, wherein, in step (b), an acidic hydrolysis of the nitrile group and the phosphinic ester group to give compounds of formula (Ia) and an acidic hydrolysis of the nitrile group to give compounds of the formula (Ib) are effected, these hydrolyses preferably being effected with a mineral acid, and in turn preferably with aqueous HCl (hydrochloric acid).

15. The use of a mixture prepared by a process defined in claims 1 to 11 and comprising at least one compound of the formula (Ia) and at least one compound of the formula (Ib), as defined in any of claims 1 to 3, for preparation of glufosinate or of glufosinate salts, especially of glufosinate, glufosinate-sodium, glufosinate hydrochloride or glufosinate-ammonium.

## Revendications

1. Procédé pour la préparation d'un mélange contenant au moins un composé de formule (Ia) et au moins un composé de formule (Ib) 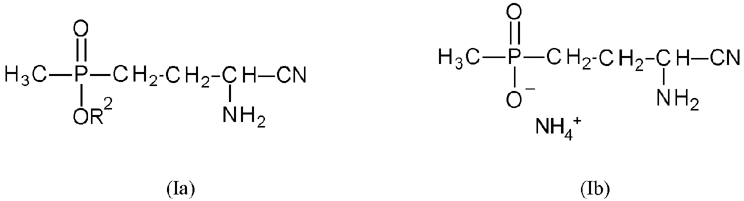 **caractérisé en ce qu'**un composé de formule (II) 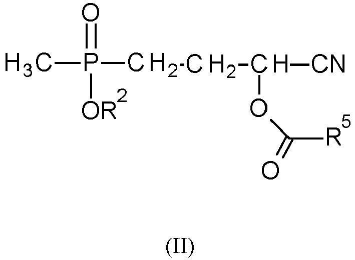 est transformé avec du NH₃, au total 2,0-3,5 équivalents molaires de NH₃ étant utilisés, par rapport à la quantité utilisée de composés de formule (II), où, à chaque fois :
R² signifie (C₁-C₁₂) -alkyle, (C₁-C₁₂) -halogénoalkyle, (C₆-C₁₀) -aryle, (C₆-C₁₀₎ -halogénoaryle, (C₇-C₁₀)-aralkyle, (C₇-C₁₀) -halogénoaralkyle, (C₄-C₁₀)-cycloalkyle ou (C₄-C₁₀)-halogénocycloalkyle,
R⁵ signifie (C₁-C₁₂) -alkyle, (C₁-C₁₂) -halogénoalkyle, (C₆-C₁₀) -aryle, (C₆-C₁₀) -halogénoaryle, (C₇-C₁₀)-aralkyle, (C₇-C₁₀) -halogénoaralkyle, (C₄-C₁₀)-cycloalkyle ou (C₄-C₁₀)-halogénocycloalkyle.

2. Procédé selon la revendication 1, **caractérisé en ce que**
R² signifie (C₃-C₆) -alkyle,
R⁵ signifie (C₁-C₄) -alkyle, (C₆-C₈) -aryle ou (C₅-C₈)-cycloalkyle.

3. Procédé selon la revendication 1 ou 2, **caractérisé en ce que**
R² signifie (C₄-C₅)-alkyle,
R⁵ signifie méthyle, éthyle ou isopropyle.

4. Procédé selon l'une quelconque des revendications 1 à 3, **caractérisé en ce qu'**au total 2,0-3,0 équivalents molaires de NH₃ sont utilisés, par rapport à la quantité utilisée de composés de formule (II).

5. Procédé selon l'une quelconque des revendications 1 à 4, **caractérisé en ce qu'**au total 2,3-2,8 équivalents molaires de NH₃ sont utilisés, par rapport à la quantité utilisée de composés de formule (II).

6. Procédé selon l'une quelconque des revendications 1 à 5, **caractérisé en ce que** le NH₃ utilisé est essentiellement exempt d'eau et la teneur en eau dans le NH₃ utilisé se situe à au maximum 1% en poids.

7. Procédé selon l'une quelconque des revendications 1 à 6, **caractérisé en ce que** la transformation a lieu sans addition de chlorure d'ammonium (NH₄Cl).

8. Procédé selon l'une quelconque des revendications 1 à 7, **caractérisé en ce qu'**un ou plusieurs composés de formule (II) tels que définis dans l'une quelconque des revendications 1 à 3 sont disposés au préalable sous forme liquide dans le réacteur et le NH₃ est ajouté.

9. Procédé selon l'une quelconque des revendications 1 à 8, **caractérisé en ce que** la transformation a lieu à une température dans la plage de 0 à 70°C, de préférence à une température dans la plage de 10 à 60°C.

10. Procédé selon l'une quelconque des revendications 1 à 8, **caractérisé en ce que** la transformation a lieu à une température dans la plage de 15 à 50°C, de préférence à une température dans la plage de 20 à 45°C.

11. Procédé selon l'une quelconque des revendications 1 à 10, **caractérisé en ce que** la transformation a lieu à une pression absolue d'au maximum 5 bars, de préférence à une pression absolue d'au maximum 4 bars, plus préférablement à une pression absolue dans la plage de 970 mbars à 3 bars.

12. Procédé pour la préparation de glufosinate 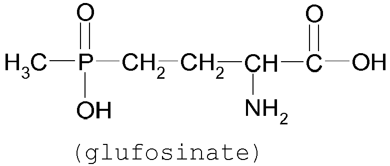 ou de sels de glufosinate, **caractérisé en ce que** dans ce procédé, un mélange contenant au moins un composé de formule (Ia) et au moins un composé de formule (Ib) est utilisé 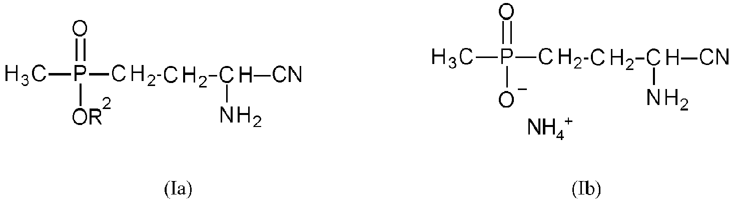 R² présentant la signification mentionnée dans l'une quelconque des revendications 1 à 3 et la préparation de ce mélange utilisé ayant lieu selon un procédé défini dans l'une quelconque des revendications 1 à 11.

13. Procédé pour la préparation de glufosinate ou de sels de glufosinate en particulier de glufosinate, de glufosinate-sodium, de chlorhydrate de glufosinate ou de glufosinate-ammonium, comprenant les étapes suivantes (a) et (b) :
(a) préparation d'un mélange préparé selon un procédé défini dans l'une quelconque des revendications 1 à 11 contenant au moins un composé de formule (Ia) et au moins un composé de formule (Ib), tels que définis dans l'une quelconque des revendications 1 à 3 et
(b) transformation du mélange préparé dans l'étape (a) contenant au moins un composé de formule (Ia) et au moins un composé de formule (Ib) en glufosinate ou en sels de glufosinate, en particulier en glufosinate, en glufosinate-sodium, en chlorhydrate de glufosinate ou en glufosinate-ammonium ou
(b) utilisation du mélange préparé dans l'étape (a) contenant au moins un composé de formule (Ia) et au moins un composé de formule (Ib) pour la préparation de glufosinate ou de sels de glufosinate, en particulier de glufosinate, de glufosinate-sodium, de chlorhydrate de glufosinate ou de glufosinate-ammonium.

14. Procédé selon la revendication 13, **caractérisé en ce que**, dans l'étape (b), une saponification acide du groupe nitrile et du groupe ester d'acide phosphinique dans les composés de formule (Ia) et une saponification acide du groupe nitrile dans les composés de formule (Ib) a lieu, ces saponifications ayant de préférence lieu avec un acide minéral, à leur tour de préférence avec du HCl aqueux (acide chlorhydrique).

15. Utilisation d'un mélange préparé selon un procédé défini dans l'une quelconque des revendications 1 à 11 contenant au moins un composé de formule (Ia) et au moins un composé de formule (Ib), tels que définis dans l'une quelconque des revendications 1 à 3, pour la préparation glufosinate ou de sels de glufosinate, en particulier de glufosinate, de glufosinate-sodium, de chlorhydrate de glufosinate ou de glufosinate-ammonium.
